(19) Europäisches Patentamt
European Patent Office
Office européen des brevets

(11) **EP 4 174 320 A1**

(12) **EUROPÄISCHE PATENTANMELDUNG**

(43) Veröffentlichungstag:
**03.05.2023 Patentblatt 2023/18**

(21) Anmeldenummer: **21205212.0**

(22) Anmeldetag: **28.10.2021**

(51) Internationale Patentklassifikation (IPC):
**F04D 17/16** (2006.01)   **F04D 29/42** (2006.01)
**F04D 29/44** (2006.01)   **F04D 29/66** (2006.01)

(52) Gemeinsame Patentklassifikation (CPC):
**F04D 29/441; F04D 17/16; F04D 29/4213;**
**F04D 29/664; F04D 29/665;** F03D 80/60;
F05D 2250/51

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Wobben Properties GmbH**
**26607 Aurich (DE)**

(72) Erfinder:
• **Koppe, Malte**
  **28199 Bremen (DE)**
• **Küwen, Henning**
  **26129 Oldenburg (DE)**
• **Valentiner, Sarah**
  **21107 Hamburg (DE)**

(74) Vertreter: **Eisenführ Speiser**
**Patentanwälte Rechtsanwälte PartGmbB**
**Johannes-Brahms-Platz 1**
**20355 Hamburg (DE)**

(54) **LUFTSTROMFÜHRUNGSVORRICHTUNG ZUR SCHALL- UND DRUCKOPTIMIERTEN ZUFÜHRUNG EINES LUFTSTROMS ZU EINER EINLASSDÜSE EINES VENTILATORS, VENTILATORVORRICHTUNG, GENERATOR, UND WINDENERGIEANLAGE**

(57) Luftstromführungsvorrichtung (1) zur schall- und druckoptimierten Zuführung eines Luftstroms (S) zu einer Einlassdüse (2) eines Ventilators (3), insbesondere eines Radialventilators (3), wobei die Einlassdüse (2) eine Düseneingangsöffnung (4) mit einem Anströmwinkel (β) aufweist, die Luftstromführungsvorrichtung (1) aufweisend: eine Rahmenvorrichtung (10), die sich zwischen einer Einlassöffnung (11), durch die der Luftstrom (S) in die Rahmenvorrichtung (10) in einem Betriebszustand einströmt, und einer Auslassöffnung (12), durch die der Luftstrom (S) aus der Rahmenvorrichtung (10) in dem Betriebszustand ausströmt, entlang einer Längsachse (L) in einer Axialrichtung (A) mit einer Höhe (h) erstreckt, wobei die Einlassöffnung (11) einen Einlassquerschnitt mit einer minimalen Einlassquerschnittsbreite (D) aufweist, und die Auslassöffnung (12) einen Auslassquerschnitt mit einer minimalen Auslassquerschnittsbreite (b) aufweist, die der minimalen Einlassquerschnittsbreite (D) entspricht oder die kleiner ist als die minimale Einlassquerschnittsbreite (D), und die Rahmenvorrichtung (10) einen Strömungskanal (K) umfasst, der die Einlassöffnung (11) und die Auslassöffnung (12) strömungstechnisch verbindet, wobei die Auslassöffnung (12) ausgebildet ist, in dem Betriebszustand strömungstechnisch mit der Einlassdüse (2) des Ventilators (3) verbunden zu werden, dadurch gekennzeichnet, dass die Höhe (h) der Rahmenvorrichtung (10) gemäß folgender Formel $h \geq (D-d)/(2 \cdot \tan(\beta))$ einem Verhältnis aus einer Differenz der minimalen Einlassquerschnittsbreite (D) und einem Durchmesser der Einlassdüse (d) und einem zweifachen Wert des Tangens des Anströmwinkels (β) entspricht oder größer ist als das Verhältnis und ein Gitterelement (19), das an der Einlassöffnung (11) angeordnet ist.

Fig. 2

## Beschreibung

Die Erfindung betrifft eine Luftstromführungsvorrichtung zur schall- und druckoptimierten Zuführung eines Luftstroms zu einer Einlassdüse eines Ventilators, insbesondere eines Radialventilators, wobei die Einlassdüse eine Düseneingangsöffnung mit einem Anströmwinkel aufweist, die Luftstromführungsvorrichtung aufweisend: eine Rahmenvorrichtung, die sich zwischen einer Einlassöffnung, durch die im Betrieb der Luftstromführungsvorrichtung der Luftstrom in die Rahmenvorrichtung einströmt, und einer Auslassöffnung, durch die im Betrieb der Luftstromführungsvorrichtung der Luftstrom aus der Rahmenvorrichtung ausströmt, entlang einer Längsachse in einer Axialrichtung mit einer Höhe erstreckt, wobei die Einlassöffnung einen Einlassquerschnitt mit einer minimalen Einlassquerschnittsbreite aufweist, und die Auslassöffnung einen Auslassquerschnitt mit einer minimalen Auslassquerschnittsbreite aufweist, die kleiner ist als die minimale Einlassquerschnittsbreite, und die Rahmenvorrichtung einen Strömungskanal umfasst, der die Einlassöffnung und die Auslassöffnung strömungstechnisch verbindet, wobei die Auslassöffnung ausgebildet ist, in dem Betriebszustand strömungs-technisch mit der Einlassdüse des Ventilators verbunden zu werden.

Ferner betrifft die Erfindung eine Ventilatorvorrichtung, einen Generator und eine Windenergieanlage.

Windenergieanlagen emittieren im Betrieb Schall. Grund hierfür sind beispielsweise Verwirbelungen des Windes an den Rotorblättern der Windenergieanlagen. Insbesondere stellen auch Aggregate innerhalb von Windenergieanlagen im Betrieb wesentliche Schallquellen dar. Eine wesentliche Schallquelle sind beispielsweise Ventilatoren, die etwa zur Kühlung eines (elektrischen) Generators von Windenergieanlagen einen Luftstrom erzeugen. Durch die Förderung und Umlenkung des Luftstroms innerhalb des Generators und insbesondere an den Ventilatoren entstehen regelmäßig Verwirbelungen, die Schall emittieren.

Den Schall nehmen Menschen und Tiere in einem bestimmten Frequenzbereich als Geräusch mit einer bestimmten Lautstärke wahr. Die Lautstärke ist durch den Schalldruckpegel charakterisiert. Zum Schutz von Menschen und Tieren dürfen Windenergieanlagen im Betrieb eine bestimmte Lautstärke (Grenzwert) aufgrund gesetzlicher Vorgaben nicht überschreiten. Der zulässige Grenzwert, den eine Windenergieanlage nicht überschreiten darf, hängt üblicherweise vom Standort der Windenergieanlage ab, an dem diese betrieben wird. Beispielsweise ist der Grenzwert in der Nähe von Ortschaften in der Regel geringer als abseits von Ortschaften.

Um zu vermeiden, dass eine Windenergieanlage im Betrieb den zulässigen Grenzwert nicht überschreitet, können Ventilatoren drehzahlreduziert betrieben werden. Dies reduziert allerdings auch die Kühlleistung der Ventilatoren, so dass häufig auch die Windenergieanlage drehzahlreduziert betrieben werden muss, um eine Überhitzung des Generators, insbesondere des Stators und/oder des Rotors, zu vermeiden.

Um den Wirkungsgrad von Windenergieanlagen zu verbessern, nimmt die Nabenhöhe und der Durchmesser des aerodynamischen Rotors von Windenergieanlagen immer weiter zu. Allerdings nimmt mit der zunehmenden Größe der Windenergieanlagen in aller Regel auch deren Schallemission zu. Ursache hierfür ist nicht nur die höhere Schallemission an den Rotorblättern, sondern auch der höhere Bedarf an Kühlleistung zur Kühlung des Generators. Es sind also größere oder mehr Ventilatoren erforderlich, die einen Luftstrom mit der erforderlichen Kühlleistung bereitstellen können. Auch hierdurch kann die Schallemission von Windenergieanlagen zunehmen. Es ist daher davon auszugehen, dass sich das zuvor skizzierte Problem zukünftig, insbesondere auch mit Blick auf die im Mittel ansteigende Durchschnittstemperatur, weiter verschärfen wird.

Es ist daher eine Aufgabe, eine Luftstromführungsvorrichtung, eine Ventilatorvorrichtung, insbesondere eine Ventilatorvorrichtung einer Windenergieanlage, einen Generator, insbesondere einen Generator für eine Windenergieanlage, und eine Windenergieanlage bereitzustellen, die einen oder mehrere der genannten Nachteile existierender Lösungen vermindern oder beseitigen.

Gemäß einem Aspekt wird diese Aufgabe gelöst durch eine Luftstromführungsvorrichtung nach Anspruch 1. Die Luftstromführungsvorrichtung ist zur schall- und druckoptimierten Zuführung eines Luftstroms zu einer Einlassdüse eines Ventilators, insbesondere eines Radialventilators, ausgebildet, wobei die Einlassdüse eine Düseneingangsöffnung mit einem Anströmwinkel aufweist.

Ventilatoren, insbesondere Radialventilatoren, sind Strömungsmaschinen, die beispielsweise Luft oder andere Gase fördern. Üblicherweise weisen solche Ventilatoren ein Ventilatorgehäuse auf, in dem ein antreibbares Laufrad drehbar gelagert ist. Beispielsweise lässt sich das Laufrad mit einem Elektromotor antreiben. Das angetriebene, d.h. sich drehende Laufrad erzeugt einen Luftstrom, den es durch eine Eingangsöffnung des Ventilatorgehäuses ansaugt (Saugseite) und durch eine Ausgangsöffnung des Ventilatorgehäuses hinausfördert (Druckseite). Die Eingangsöffnung des Ventilatorgehäuses ist üblicherweise als Einlassdüse mit der Düseneingangsöffnung ausgebildet.

Die Einlassdüse ist vorzugsweise kreisförmig ausgebildet. Es kann auch bevorzugt sein, dass die Einlassdüse polygonal, beispielsweise rechteckig oder quadratisch ausgebildet ist. Die Einlassdüse wird durch die Form und Größe des Öffnungsquerschnitts sowie den Anströmwinkel charakterisiert. Insbesondere ist der Anströmwinkel der Anströmwinkel, mit dem die Luft am äußeren Rand der Einlassdüse in den Ventilator gesaugt wird. Üblicherweise geben die Hersteller der Ventilatoren durch die Ausgestaltung der Einlassdüse den Anströmwinkel vor. Der Anströmwinkel ist also insbesondere abhängig vom Typ des Ventilators. Der Anströmwinkel beschreibt in bevorzugter Weise den Winkel mit der die Luft in die Einlassdüse einströmt. Insbesondere ist der Anströmwinkel jener Winkel, mit der die Luft am Rand der Einlassdüse in die Einlassdüse durch die Düseneingangsöffnung einströmt. Der Anströmwinkel ist insbesondere jener Winkel, um den die in die Einlassdüse einströmende Luft am Rand der Einlassdüse, insbesondere der Düseneingangsöffnung, zu einer Flächennormalen, die sich orthogonal zu der Düseneingangsöffnung erstreckt, geneigt ist. Insbesondere ist der Anströmwinkel jener Winkel, um den die in die Einlassdüse einströmende Luft am Rand der Einlassdüse, insbesondere der Düseneingangsöffnung, zu einer Drehachse des Laufrads des Ventilators, die sich orthogonal zu der Düseneingangsöffnung erstreckt, geneigt ist.

Die Luftstromführungsvorrichtung weist eine Rahmenvorrichtung auf, die sich in einer Axialrichtung zwischen einer Einlassöffnung und einer Auslassöffnung entlang einer Längsachse mit einer Höhe erstreckt. Die Rahmenvorrichtung ist vorzugsweise aus profilierten Rahmenelementen gebildet. Die profilierten Rahmenelemente umfassen beispielsweise einen U-förmigen Querschnitt und/oder einen I-förmigen Querschnitt und/oder einen T-förmigen Querschnitt. Die Rahmenvorrichtung ist vorzugsweise aus Metall, insbesondere Stahl oder Aluminium, und/oder Kunststoff ausgebildet. Im Betrieb der Luftstromführungsvorrichtung strömt der Luftstrom durch die Einlassöffnung in die Rahmenvorrichtung ein und durch die Auslassöffnung aus der Rahmenvorrichtung aus. Die Auslassöffnung ist im Betrieb der Luftstromführungsvorrichtung strömungstechnisch mit der Einlassdüse des Ventilators verbunden.

Die Einlassöffnung weist einen Einlassquerschnitt mit einer minimalen Einlassquerschnittsbreite auf und die Auslassöffnung weist einen Auslassquerschnitt mit einer minimalen Auslassquerschnittsbreite auf. Die minimale Auslassquerschnittsbreite ist kleiner als die minimale Einlassquerschnittsbreite. Die minimale Auslassquerschnittsbreite ist insbesondere ein minimaler Auslassquerschnittsdurchmesser. Die minimale Einlassquerschnittsbreite ist insbesondere ein minimaler Einlassquerschnittsdurchmesser.

Ferner umfasst die Rahmenvorrichtung einen Strömungskanal, der die Einlassöffnung und die Auslassöffnung strömungstechnisch verbindet. Der Strömungskanal ist vorzugsweise rohrförmig ausgebildet. Insbesondere ist der Strömungskanal zylinderförmig ausgebildet. Es kann alternativ bevorzugt sein, dass der Strömungskanal einen polygonalen, insbesondere quadratischen oder rechteckigen, Querschnitt aufweist.

Die Höhe h der Rahmenvorrichtung entspricht gemäß folgender Formel

$$h \geq \frac{D - d}{2 \cdot tan(\beta)}$$

einem Verhältnis aus einer Differenz der minimalen Einlassquerschnittsbreite D und einem Durchmesser der Einlassdüse, insbesondere einer Düseneingangsöffnung der Einlassdüse, d und einem zweifachen Wert des Tangens des Anströmwinkels β oder ist größer als das Verhältnis.

Ferner weist die Luftstromführungsvorrichtung ein Gitterelement auf, das an der Einlassöffnung angeordnet ist. Das Gitterelement ist insbesondere ein Maschengitter. Insbesondere besteht das Gitterelement aus Stahl. Das Gitterelement weist vorzugsweise eine Maschenweite von mindestens 0,5mm, 1mm, 2mm, 5mm, 10mm oder mehr auf. Ergänzend oder alternativ weist das Gitterelement vorzugsweise eine Maschenweite von maximal 0,5mm, 1mm, 2mm, 5mm oder 10 mm auf. Insbesondere ist bevorzugt, dass das Gitterelement aus einem Drahtgeflecht besteht oder dieses umfasst. Vorzugsweise weist der Draht des Drahtgeflechts einen Drahtdurchmesser von mindestens 0,2mm, 0,5mm, 1mm, 1,5mm, 2mm oder mehr auf. Ergänzend oder alternativ weist der Draht des Drahtgeflechts einen Drahtdurchmesser von maximal 0,2mm, 0,5mm, 1mm, 1,5mm oder 2mm auf.

Vorzugsweise wird das Gitterelement außerhalb an der Rahmenvorrichtung befestigt. Vorzugsweise wird das Gitterelement mittels einer Schraub- und/oder Klemmverbindung an der Rahmenvorrichtung befestigt. Es kann ergänzend oder alternativ bevorzugt sein, das Gitterelement stoffschlüssig, beispielsweise mit einer Schweißverbindung, an der Rahmenvorrichtung befestigt ist.

Die Anordnung des Gitterelements an der Einlassöffnung verhindert, dass gröberer Schmutz in den Ventilator gesaugt und in den Generator gefördert wird. Ferner verhindert das Gitterelement, dass größere Gegenstände, zum Beispiel Werkzeug, oder Personen in den Ventilator gelangen. Das Gitterelement ist insoweit auch als Eingreifschutz ausgelegt. Das Gitterelement bewirkt somit einerseits eine längere Lebensdauer und verhindert andererseits Personenverletzungen.

Es ist zu verstehen, dass in Abhängigkeit der Höhe der Rahmenvorrichtung die Anströmfläche variiert, durch die Luft durch das Gitterelement in die Luftstromführungsvorrichtung an der Einlassöffnung einströmt. Vorzugsweise ist die Höhe der Rahmenvorrichtung derart gewählt, dass die Anströmfläche mindestens 50% der Gesamtfläche der Einlassöffnung entspricht. Insbesondere ist die Höhe der Rahmenvorrichtung derart gewählt, dass die Anströmfläche mindestens 75% der Gesamtfläche der Einlassöffnung entspricht. Besonders bevorzugt ist die Höhe der Rahmenvorrichtung derart gewählt, dass die Anströmfläche mindestens 100% der Gesamtfläche der Einlassöffnung entspricht.

Die Erfindung beruht auf der Erkenntnis der Erfinder, dass ein geringer Abstand zwischen einem Gitterelement und der Einlassdüse zu einem vergleichsweise hohen Druckverlust führt, da die durchströmte Fläche des Gitterelements vergleichsweise klein ist. Die Anordnung einer Rahmenvorrichtung mit der erfindungsgemäßen Höhe führt dazu, dass die durchströmte Fläche des Gitterelements aufgrund des Anströmwinkels wesentlich größer und der Druckverlust entsprechend kleiner wird. Somit lässt sich die Kühlleistung eines Ventilators durch die Anordnung der Luftstromführungsvorrichtung bei gleichbleibender Ventilatorleistung erheblich erhöhen.

Somit können Ventilatoren mit einer höheren Drehzahl betrieben werden und eine höhere Kühlleistung realisieren, ohne die gesetzlichen Grenzwerte zu überschreiten.

Durch die Anordnung einer solchen Luftstromführungsvorrichtung lässt sich somit die Kühlleistung erheblich verbessern, so dass aufwändige und kostenintensive Umrüstungen und/oder Nachrüstungen bestehender Windenergieanlagen entfallen können.

Gemäß einer bevorzugten Ausführungsform der Luftstromführungsvorrichtung ist vorgesehen, dass der Einlassquerschnitt kreisförmig oder polygonal, insbesondere viereckförmig, ausgebildet ist. Ergänzend oder alternativ ist vorgesehen, dass der Auslassquerschnitt kreisförmig, insbesondere rohrförmig, oder polygonal, insbesondere viereckförmig, ausgebildet ist. Vorzugsweise entspricht der Auslassquerschnitt dem Einlassquerschnitt. Besonders bevorzugt ist die minimale Auslassquerschnittsbreite des Auslassquerschnitts größer als der Durchmesser des Querschnitts einer Düseneingangsöffnung eines Ventilators der Einlassdüse.

Dies hat den Vorteil, insbesondere wenn die minimale Auslassquerschnittsbreite des Auslassquerschnitts größer als der Durchmesser des Querschnitts der Düseneingangsöffnung der Einlassdüse ist, dass die von dem Ventilator angesaugte Luft nicht verwirbelt wird. Ferner hat dies den Effekt, dass die Luft dem Ventilator schallreduziert zugeführt werden kann.

Nach einer weiteren bevorzugten Fortbildung der Luftstromführungsvorrichtung ist vorgesehen, dass die Rahmenvorrichtung eine rohrförmig ausgebildete Außenwand und/oder eine rohrförmig ausgebildete Innenwand aufweist und/oder die Rahmenvorrichtung doppelwandig ausgebildet ist.

Dies hat den Vorteil, dass die Rahmenvorrichtung an den Querschnitt der Einlassdüse des Ventilators angepasst werden kann. Dies minimiert Verwirbelungen und reduziert den emittierten Schall.

Ferner ist nach einer bevorzugten Fortbildung der Luftstromführungsvorrichtung vorgesehen, dass die rohrförmig ausgebildete Außenwand ringförmig ausgebildet ist, wobei vorzugsweise die rohrförmig ausgebildete Außenwand einen kreisförmigen oder einen polygonalen, insbesondere viereckigen Querschnitt aufweist. Ergänzend oder alternativ ist vorgesehen, dass die rohrförmig ausgebildete Innenwand ringförmig ausgebildet ist, wobei vorzugsweise die rohrförmig ausgebildete Innenwand einen kreisförmigen oder einen polygonalen, insbesondere viereckigen Querschnitt aufweist.

Weiterhin ist gemäß einer bevorzugten Fortbildung der Luftstromführungsvorrichtung vorgesehen, dass die Innenwand beabstandet zu der Außenwand angeordnet ist und einen Hohlraum, insbesondere einen ringförmigen Hohlraum, mit einem Hohlraumvolumen ausbildet.

Nach einer ferner bevorzugten Fortbildung der Luftstromführungsvorrichtung vorgesehen, dass die Innenwand wenigstens einen Durchgangskanal aufweist, der den Strömungskanal mit dem Hohlraum strömungstechnisch verbindet, wobei die Innenwand vorzugsweise als Lochblechwand ausgebildet ist, wobei besonders bevorzugt die Innenwand mehrere Durchgangskanäle aufweist, die äquidistant beabstandet zueinander angeordnet sind.

Gemäß einer ferner bevorzugten Fortbildung der Luftstromführungsvorrichtung vorgesehen, dass der wenigstens eine Durchgangskanal eine freie Innenwandöffnungsquerschnittsfläche der Innenwand definiert, wobei mindestens ein Drittel, mindestens eine Hälfte oder mindestens zwei Drittel der Innenwand durch die freie Innenwandöffnungsquerschnittsfläche ausgebildet sind. Die freie Innenwandöffnungsquerschnittsfläche ist insbesondere von der Anzahl und der Größe der Öffnungsquerschnittsfläche des wenigstens einen Durchgangskanals abhängig.

Die Innenwandöffnungsquerschnittsfläche kann beispielsweise durch eine als Lochblech oder Lochplatte ausgebildete Innenwand realisiert sein, um möglichst homogen über die Fläche verteilte Resonatoröffnungen zu erhalten. Vorzugsweise weist die Innenwand eine Wandstärke von mindestens 0,5cm, 1cm, 1,5 cm, 2cm oder mehr auf.

Weiterhin ist in einer bevorzugten Ausführungsform der Luftstromführungsvorrichtung vorgesehen, dass zwischen der Innenwand und der Außenwand, insbesondere in dem Hohlraum, ein Schallabsorptionselement angeordnet ist. Das Schallabsorptionselement ist insbesondere ein geschlossenzelliger Polyethylen-Schaumstoff. Ferner hat die Luftstromführungsvorrichtung den Vorteil, dass der emittierte Schall erheblich minimiert wird.

Ferner ist gemäß einer bevorzugten Ausführungsform vorgesehen, dass die Luftstromführungsvorrichtung einen Strömungsgleichrichter aufweist, der an der Auslassöffnung angeordnet ist, insbesondere in Strömungsrichtung des Luftstroms vorgelagert zu der Auslassöffnung angeordnet ist. Der Strömungsgleichrichter minimiert in bevorzugter Weise Verwirbelungen und reduziert dadurch den emittierten Schall. Ergänzend oder alternativ ist bei dieser Ausführungsform vorgesehen, dass ein Gitterelement in Strömungsrichtung des Luftstroms vorgelagert zu der Einlassöffnung angeordnet ist. Vorzugsweise ist vorgesehen, dass das Gitterelement den Einlassquerschnitt der Einlassöffnung überdeckt. Ergänzend oder alternativ ist vorzugsweise vorgesehen, dass das Gitterelement mehrere Einlasskanäle aufweist, die eine Umgebung der Luftstromführungsvorrichtung mit dem Strömungskanal strömungstechnisch verbinden. Ferner ist ergänzend oder alternativ vorzugsweise vorgesehen, dass der wenigstens eine Einlasskanal eine freie Einlassöffnungsquerschnittsfläche des Gitterelements definiert, wobei mindestens ein Drittel oder mindestens eine Hälfte oder mindestens zwei Drittel des Gitterelements durch die freie Einlassöffnungsquerschnittsfläche ausgebildet sind.

Gemäß einer ferner bevorzugten Fortbildung der Luftstromführungsvorrichtung ist vorgesehen, dass die Luftstromführungsvorrichtung als Helmholtz-Absorber ausgebildet ist, wobei der Hohlraum als Resonanzkörper ausgebildet ist. Vorzugsweise ist bei dieser Ausführungsform vorgesehen, dass der Hohlraum in der Axialrichtung und durch die Außenwand der Hohlraum in der Radialrichtung gegenüber der Umgebung luftdicht verschlossen ist. Ergänzend oder alternativ ist vorzugsweise vorgesehen, dass die Luftstromführungsvorrichtung eine Hohlraumsperreinheit aufweist, welche ausgebildet ist, den Hohlraum in der Axialrichtung gegenüber der Umgebung luftdicht zu verschließen.

Nach einer ferner bevorzugten Fortbildung der Luftstromführungsvorrichtung ist vorgesehen, dass die freie Innenwandöffnungsquerschnittsfläche der Innenwand, eine Wandstärke der Innenwand und das Hohlraumvolumen des Hohlraums in Abhängigkeit einer dominanten Frequenz f des Ventilators gemäß folgender Formel

$$f = \frac{c}{2\pi}\sqrt{\frac{S_0}{V_0 \cdot L}}$$

ausgestaltet sind. Die dominante Frequenz f ist insbesondere die Blattpassierfrequenz *BPF,* welche von der Drehzahl n des Laufrads des Ventilators und der Anzahl der Schaufeln k des Laufrads gemäß folgender Formel

$$BPF = \frac{n}{60} * k$$

abhängt.

Gemäß einem weiteren Aspekt wird die eingangs genannte Aufgabe gelöst durch eine Ventilatorvorrichtung nach Anspruch 12.

Die Ventilatorvorrichtung weist einen Ventilator, insbesondere einen Radialventilator, mit einer Einlassdüse, die eine Düseneingangsöffnung mit einem Anströmwinkel aufweist, und eine Luftstromführungsvorrichtung gemäß dem zuvor beschriebenen Aspekt oder gemäß einer der zuvor beschriebenen Ausführungsformen auf, die an der Düseneingangsöffnung der Einlassdüse angeordnet ist.

Vorzugsweise ist vorgesehen, dass die Luftstromführungsvorrichtung in Strömungsrichtung des Luftstroms vorgelagert zu dem Ventilator angeordnet ist. Ergänzend oder alternativ ist ferner bevorzugt, dass der Auslassquerschnitt einem Querschnitt der Düseneingangsöffnung entspricht.

Gemäß einem weiteren Aspekt wird die eingangs genannte Aufgabe gelöst durch einen Generator nach Anspruch 13. Der Generator ist insbesondere ein Generator einer Windenergieanlage. Der Generator weist mindestens eine zuvor beschriebene Ventilatorvorrichtung auf.

Gemäß einem weiteren Aspekt wird die eingangs genannte Aufgabe gelöst durch eine Windenergieanlage nach Anspruch 14. Die Windenergieanlage, weist einen zuvor beschriebenen Generator und/oder eine zuvor beschriebene Ventilatorvorrichtung auf.

Für weitere Vorteile, Ausführungsvarianten und Ausführungsdetails der weiteren Aspekte und ihrer möglichen Fortbildungen wird auch auf die zuvor erfolgte Beschreibung zu den entsprechenden Merkmalen und Fortbildungen der Luftstromführungsvorrichtung verwiesen.

Bevorzugte Ausführungsbeispiele werden beispielhaft anhand der beiliegenden Figuren beschrieben. Es zeigen:

Figur 1:     eine schematische, dreidimensionale Ansicht einer beispielhaften Ausführungsform einer Windenergieanlage;

Figur 2:     eine schematische Schnittansicht in einer Seitenansicht einer beispielhaften Ausführungsform einer Ventilatorvorrichtung;

Figur 3:     eine schematische Draufsicht der in Figur 2 dargestellten Ventilatorvorrichtung;

Figur 4:     eine schematische Schnittansicht in einer Seitenansicht einer weiteren beispielhaften Ausführungsform einer Ventilatorvorrichtung; und

Figur 5:     eine schematische Draufsicht der in Figur 4 dargestellten Ventilatorvorrichtung.

In den Figuren sind gleiche oder im Wesentlichen funktionsgleiche Elemente mit den gleichen Bezugszeichen versehen. Allgemeine Beschreibungen beziehen sich in der Regel auf alle Ausführungsformen, sofern Unterschiede nicht explizit angegeben sind.

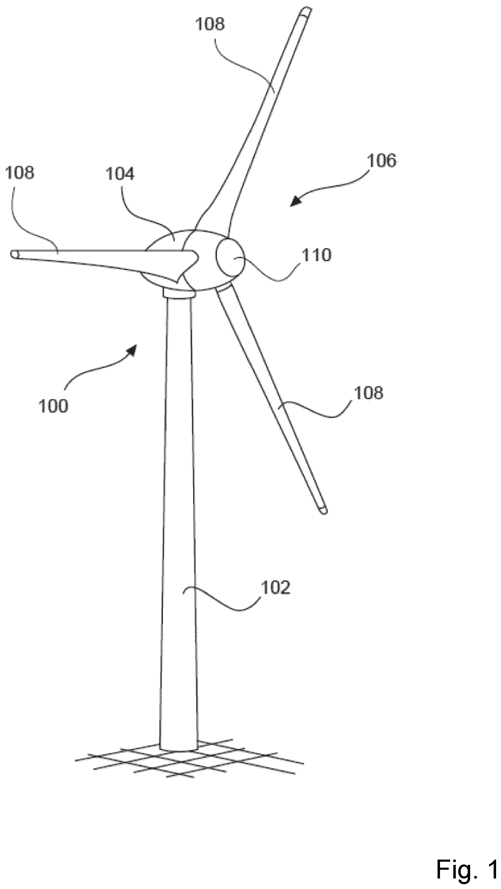

Die Erläuterung der Erfindung anhand von Beispielen unter Bezugnahme auf die Figuren erfolgt im Wesentlichen schematisch und die Elemente, die in der jeweiligen Figur erläutert werden, können darin zur besseren Veranschaulichung überzeichnet und andere Elemente vereinfacht sein. So veranschaulicht beispielsweise Figur 1 eine Windenergieanlage 100 als solche schematisch, sodass eine Ventilatorvorrichtung 5 oder die Luftstromführungsvorrichtung 1 und ein Generator im Detail nicht erkennbar sind.

Figur 1 zeigt eine schematische, dreidimensionale Ansicht einer Windenergieanlage 100. Die Windenergieanlage 100 weist einen Turm 102 und eine Gondel 104 auf dem Turm 102 auf. Der Turm 102 kann hierbei aus aneinander angeordneten Turmsegmenten bestehen. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der Generator ist in der Gondel 104 angeordnet und erzeugt elektrische Energie. Die Ventilatorvorrichtung 5 umfassend einen Ventilator 3 und die Luftstromführungsvorrichtung 1 ermöglichen eine Kühlung des Generators mit einem schall- und druckoptimiert zugeführten Luftstrom.

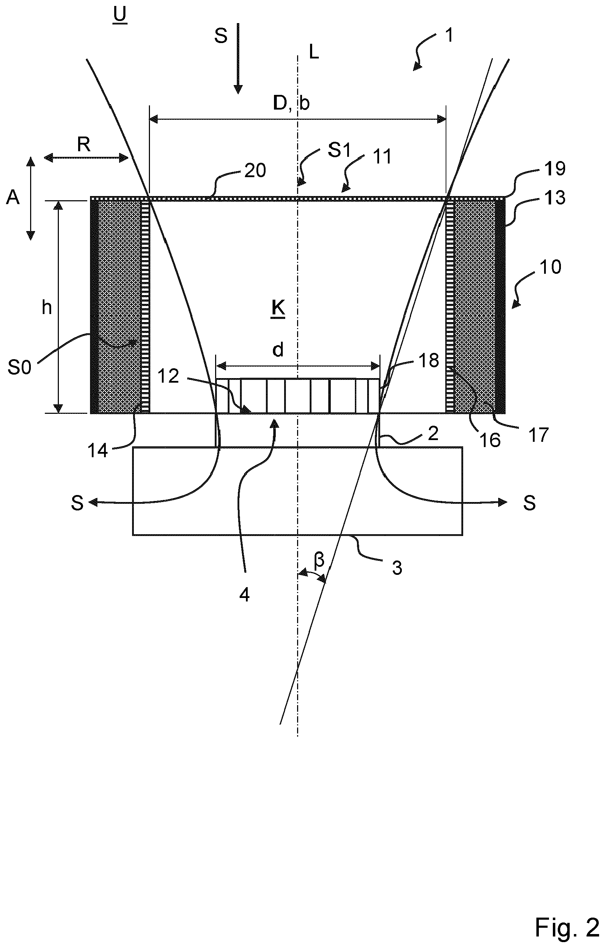

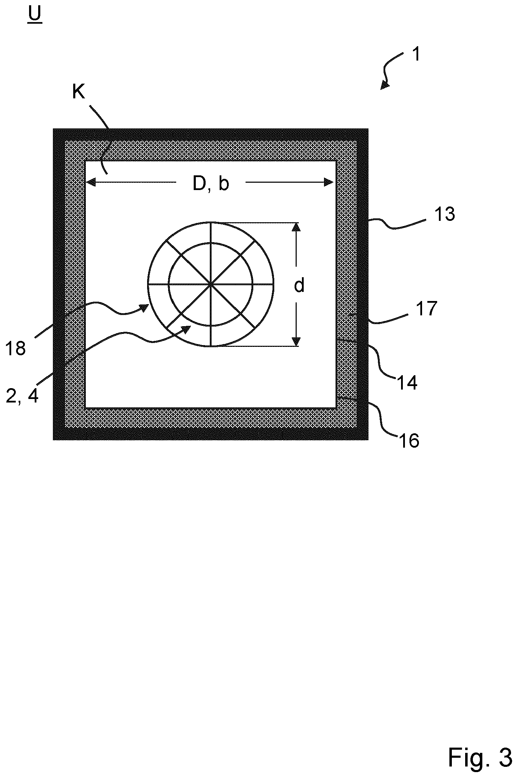

Figuren 2 und 3 zeigen eine bevorzugte beispielhafte Ausführungsform einer Ventilatorvorrichtung 5 für einen Generator einer Windenergieanlage 100. Figur 2 zeigt eine schematische Schnittansicht in einer Seitenansicht der beispielhaften Ausführungsform der Ventilatorvorrichtung 5. Figur 3 zeigt eine schematische Draufsicht der in Figur 2 dargestellten Ventilatorvorrichtung.

Die Ventilatorvorrichtung 5 weist einen Radialventilator 3 und eine Luftstromführungsvorrichtung 1 auf. Der Radialventilator 3 weist eine Düseneingangsöffnung 4 mit einem Anströmwinkel $\beta$ auf. Im Betrieb erzeugt der Radialventilator 3 einen Luftstrom S, der durch die Düseneingangsöffnung 4 der Einlassdüse 2 in den Radialventilator 3 einströmt. Der Anströmwinkel $\beta$ beschreibt insbesondere den Winkel, mit dem die Luft am Rand der Düseneingangsöffnung 4 in die Einlassdüse 2 einströmt. Zur schall- und druckoptimierten Zuführung des Luftstroms S zu der Einlassdüse 2 des Radialventilators 3 ist an der Düseneingangsöffnung 4 der Einlassdüse 2 die Luftstromführungsvorrichtung 1 angeordnet, so dass die Rahmenvorrichtung 10 mit dem Radialventilator 3 strömungstechnisch verbunden ist.

Zur schall- und druckoptimierten Zuführung des Luftstroms S weist die Luftstromführungsvorrichtung 1 eine Rahmenvorrichtung 10 auf, die sich in Axialrichtung A entlang einer Längsachse L zwischen einer Einlassöffnung 11 und einer Auslassöffnung 12 mit einer Höhe h erstreckt.

Die Einlassöffnung 11 umfasst einen Einlassquerschnitt mit einer minimalen Einlassquerschnittsbreite D und die Auslassöffnung 12 einen Auslassquerschnitt mit einer minimalen Auslassquerschnittsbreite d. Die Ein- und Auslassöffnung 11, 12 sind derart ausgebildet, dass die minimale Auslassquerschnittsbreite b der minimalen Einlassquerschnittsbreite D der Einlassöffnung 11 entspricht. In der bevorzugten Ausführungsform der Luftstromführungsvorrichtung 1 weisen der Einlassquerschnitt und der Auslassquerschnitt eine quadratische Querschnittsfläche auf. Es kann bevorzugt sein, dass der Einlassquerschnitt und der Auslassquerschnitt eine runde, insbesondere eine kreisförmige, Querschnittsfläche aufweisen. Die Auslassöffnung 12 ist insbesondere korrespondierend zu der Düseneingangsöffnung 4 der Einlassdüse 2 ausgebildet. Vorzugsweise ist in Strömungsrichtung S des Luftstroms S vorgelagert zu der Auslassöffnung 12 ein Strömungsgleichrichter 18 angeordnet.

Zwischen der Einlassöffnung 11 und der Auslassöffnung 12 erstreckt sich ein Strömungskanal K, der die Einlassöffnung 11 und die Auslassöffnung 12 strömungstechnisch verbindet. Der Strömungskanal K weist vorzugsweise einen Kanalquerschnitt auf, der dem Einlassquerschnitt und/oder dem Auslassquerschnitt entspricht. Insbesondere weist der Kanalquerschnitt eine quadratische oder runde, insbesondere eine kreisförmige, Querschnittsfläche auf. Der Strömungskanal K weist entlang der Längsachse L in Axialrichtung A einen im Wesentlichen konstanten Kanalquerschnitt auf. Vorzugsweise weist der Strömungskanal K eine Kanalbreite auf, die der minimalen Einlassquerschnittsbreite D der Einlassöffnung 11 entspricht. Es kann bevorzugt sein, dass der Kanalquerschnitt des Strömungskanals K an der Einlassöffnung 11 dem Einlassquerschnitt mit der minimalen Einlassquerschnittsbreite D entspricht und an der Auslassöffnung 12 dem Auslassquerschnitt mit der minimalen Auslassquerschnittsbreite b entspricht. Insbesondere kann bevorzugt sein, dass der Kanalquerschnitt des Strömungskanals von der Einlassöffnung 11 in Richtung der Auslassöffnung 12 abnimmt. Allerdings ist hierbei vorgesehen, dass die minimale Auslassquerschnittsbreite b größer ist als der Durchmesser der Düseneingangsöffnung 4 der Einlassdüse 2. Der Strömungskanal K erstreckt sich entlang der Längsachse L in Axialrichtung im Wesentlichen mit der Höhe h.

Die Rahmenvorrichtung 10 ist doppelwandig ausgebildet und weist eine rohrförmig ausgebildete Außenwand 13 und eine rohrförmig ausgebildete Innenwand 14 auf. In der vorliegenden Ausführungsform weisen sowohl die Außenwand 13 als auch die Innenwand 14 einen viereckigen Querschnitt auf. Die Innenwand 14 ist innerhalb der Außenwand 13 und beabstandet zu dieser angeordnet. Hierdurch wird zwischen der Außenwand 13 und der Innenwand 14 ein ringförmiger Hohlraum 15 mit einem Hohlraumvolumen Vo gebildet. In dem zwischen der Innenwand 14 und der Außenwand 13 gebildeten Hohlraum 15 ist in der vorliegenden Ausführungsform ein Schallabsorptionselement 17 aus einem geschlossenzelligen Polyethylen-Schaumstoff angeordnet.

Die Innenwand 14 ist als Lochblechwand ausgebildet, die mehrere Durchgangskanäle 16 aufweist, die den Strömungskanal K mit dem Hohlraum 15 strömungstechnisch verbinden. Die Durchgangskanäle 16 sind äquidistant zueinander angeordnet, die Abstände zwischen benachbarten Durchgangskanäle 16 sind also gleich. Die Durchgangskanäle 16 definieren eine freie Innenwandöffnungsquerschnittsfläche So der Innenwand 14. Vorliegend ist mindestens die Hälfte der Innenwand 14 durch die freie Innenwandöffnungsquerschnittsfläche So ausgebildet.

Die Luftstromführungsvorrichtung 1 weist ferner ein Gitterelement 19 auf. Das Gitterelement 19 ist in Strömungsrichtung S des Luftstroms S vorgelagert zu der Einlassöffnung 11 an der Einlassöffnung 11 angeordnet. Das Gitterelement 19 weist mehrere Einlasskanäle 20 auf, die die Umgebung U der Luftstromführungsvorrichtung 1 mit dem Strömungskanal K strömungstechnisch verbinden. Vorzugsweise bilden die Einlasskanäle 20 eine freie Einlassöffnungsquerschnittsfläche $S_1$ des Gitterelements 19, so dass mehr als zwei Drittel des Gitterelements 19 durch die freie Einlassöffnungsquerschnittsfläche $S_1$ ausgebildet sind.

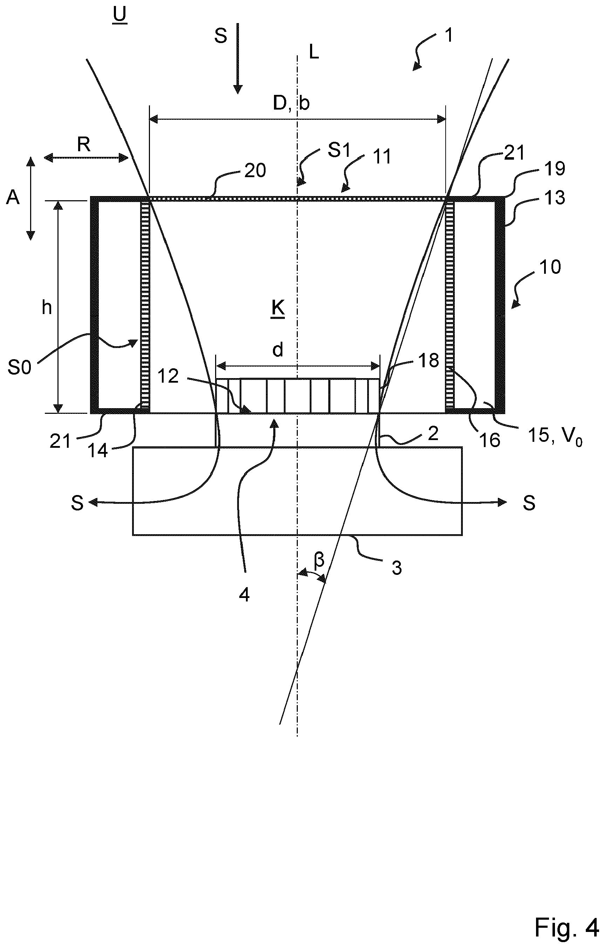

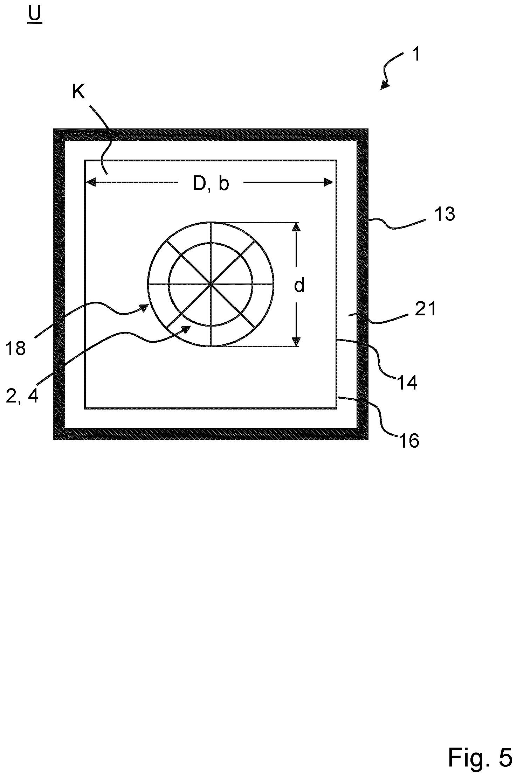

Figuren 4 und 5 zeigen eine weitere bevorzugte beispielhafte Ausführungsform einer Ventilatorvorrichtung 5 für einen Generator einer Windenergieanlage 100. Figur 4 zeigt eine schematische Schnittansicht in einer Seitenansicht der weiteren beispielhaften Ausführungsform der Ventilatorvorrichtung 5. Figur 4 zeigt eine schematische Draufsicht der in Figur 5 dargestellten Ventilatorvorrichtung 5.

Die in den Figuren 4 und 5 dargestellte beispielhafte Ventilatorvorrichtung 5 beruht im Wesentlichen auf der in den Figuren 2 und 3 beispielhaft dargestellten Ventilatorvorrichtung 5. Die in den Figuren 4 und 5 dargestellte beispielhafte Ventilatorvorrichtung 5 unterscheidet sich im Wesentlichen von der in den Figuren 2 und 3 beispielhaft dargestellten Ventilatorvorrichtung 5 darin, dass in dem Hohlraum 15 kein Schallabsorptionselement 17 angeordnet ist.

In dieser bevorzugten Ausführungsform ist der Luftstromführungsvorrichtung 1 als Helmholtz-Absorber ausgebildet ist, wobei der Hohlraum 15 als Resonanzkörper ausgebildet ist. Hierzu ist der Hohlraum 15 in einer Radialrichtung R und in der Axialrichtung A gegenüber der Umgebung U luftdicht verschlossen. Ferner ist eine Hohlraumsperreinheit 21 vorgesehen, die den Hohlraum 15 in Axialrichtung A auf der Seite der Einlassöffnung 11 gegenüber der Umgebung U luftdicht verschließt. Auf der Seite der Auslassöffnung 12 verschließt eine Bodenplatte, welche die Auslassöffnung 12 aufweist, den Hohlraum 15 auf der Seite der Auslassöffnung 12 in Axialrichtung A gegenüber der Umgebung U luftdicht.

Bei der vorliegend als Helmholtz-Absorber ausgebildeten Luftstromführungsvorrichtung 1 sind die freie Innenwandöffnungsquerschnittsfläche So und eine Wandstärke der Innenwand 14 sowie das Hohlraumvolumen Vo des Hohlraums in Abhängigkeit einer dominanten Frequenz f des Ventilators 3 gemäß folgender Formel

$$f = \frac{c}{2\pi}\sqrt{\frac{S_0}{V_0 \cdot L}}$$

ausgestaltet.

Bezugszeichenliste

| | |
|---|---|
| 1 | Luftstromführungsvorrichtung |
| 2 | Einlassdüse |
| 3 | Ventilator |
| 4 | Düseneingangsöffnung |
| 5 | Ventilatorvorrichtung |
| 10 | Rahmenvorrichtung |
| 11 | Einlassöffnung |
| 12 | Auslassöffnung |
| 13 | Außenwand |
| 14 | Innenwand |
| 15 | Hohlraum |
| 16 | Durchgangskanal |
| 17 | Schallabsorptionselement |
| 18 | Strömungsgleichrichter |
| 19 | Gitterelement |
| 20 | Einlasskanal |
| 21 | Hohlraumsperreinheit |
| 100 | Windenergieanlage |
| 102 | Turm |
| 104 | Gondel |
| 106 | Rotor |
| 108 | Rotorblätter |
| 109 | Stator |
| 110 | Spinner |
| β | Anströmwinkel |
| A | Axialrichtung |
| b | minimale Auslassquerschnittsbreite |
| D | minimale Einlassquerschnittsbreite |
| d | Durchmesser der Einlassdüse bzw. der Düseneingangsöffnung |
| h | Höhe der Rahmenvorrichtung |
| Vo | Hohlraumvolumen |
| K | Strömungskanal |
| L | Längsachse |
| R | Radialrichtung |
| S | Luftstrom/Strömungsrichtung des Luftstroms |
| So | freie Innenwandöffnungsquerschnittsfläche |
| $S_1$ | freie Einlassöffnungsquerschnittsfläche |
| U | Umgebung |

Patentansprüche

1. Luftstromführungsvorrichtung (1) zur schall- und druckoptimierten Zuführung eines Luftstroms (S) zu einer Einlassdüse (2) eines Ventilators (3), insbesondere eines Radialventilators (3), wobei die Einlassdüse (2) eine Düseneingangsöffnung (4) mit einem Anströmwinkel (β) aufweist,
die Luftstromführungsvorrichtung (1) aufweisend:

— eine Rahmenvorrichtung (10), die sich zwischen einer Einlassöffnung (11), durch die im Betrieb der Luftstromführungsvorrichtung (1) der Luftstrom (S) in die Rahmenvorrichtung (10) einströmt, und einer Auslassöffnung (12), durch die im Betrieb der Luftstromführungsvorrichtung (1) der Luftstrom (S) aus der Rahmenvorrichtung (10) ausströmt, entlang einer Längsachse (L) in einer Axialrichtung (A) mit einer Höhe (h) erstreckt, wobei

> • die Einlassöffnung (11) einen Einlassquerschnitt mit einer minimalen Einlassquerschnittsbreite (D) aufweist, und
> • die Auslassöffnung (12) einen Auslassquerschnitt mit einer minimalen Auslassquerschnittsbreite (b) aufweist, die der minimalen Einlassquerschnittsbreite (D) entspricht oder die kleiner ist als die minimale Einlassquerschnittsbreite (D), und

> — die Rahmenvorrichtung (10) einen Strömungskanal (K) umfasst, der die Einlassöffnung (11) und die Auslassöffnung (12) strömungstechnisch verbindet, wobei
> — die Auslassöffnung (12) ausgebildet ist, im Betrieb der Luftstromführungsvorrichtung (1) strömungstechnisch mit der Einlassdüse (2) des Ventilators (3) verbunden zu werden,

**dadurch gekennzeichnet, dass**

> — die Höhe (h) der Rahmenvorrichtung (10) gemäß folgender Formel

$$h \geq \frac{D - d}{2 \cdot tan(\beta)}$$

> einem Verhältnis aus einer Differenz der minimalen Einlassquerschnittsbreite (D) und einem Durchmesser der Einlassdüse (d) und einem zweifachen Wert des Tangens des Anströmwinkels (β) entspricht oder größer ist als das Verhältnis, und
> — ein Gitterelement (19), das an der Einlassöffnung (11) angeordnet ist.

2. Luftstromführungsvorrichtung (1) nach dem vorhergehenden Anspruch 1, wobei

> — der Einlassquerschnitt kreisförmig oder polygonal, insbesondere viereckförmig, ausgebildet ist, und/oder
> — der Auslassquerschnitt kreisförmig, insbesondere rohrförmig, oder polygonal, insbesondere viereckförmig, ausgebildet ist, wobei der Auslassquerschnitt vorzugsweise einem Querschnitt einer Düseneingangsöffnung eines Ventilators entspricht.

3. Luftstromführungsvorrichtung (1) nach einem der vorhergehenden Ansprüche 1 oder 2, wobei die Rahmenvorrichtung (10) eine rohrförmig ausgebildete Außenwand (13) und/oder eine rohrförmig ausgebildete Innenwand (14) aufweist und/oder die Rahmenvorrichtung (10) doppelwandig ausgebildet ist.

4. Luftstromführungsvorrichtung (1) nach dem vorhergehenden Anspruch 3, wobei

> — die rohrförmig ausgebildete Außenwand (13) ringförmig ausgebildet ist, wobei vorzugsweise die rohrförmig ausgebildete Außenwand (13) einen kreisförmigen oder einen polygonalen, insbesondere viereckigen Querschnitt aufweist, und/oder
> — die rohrförmig ausgebildete Innenwand (14) ringförmig ausgebildet ist, wobei vorzugsweise die rohrförmig ausgebildete Innenwand (14) einen kreisförmigen oder einen polygonalen, insbesondere viereckigen Querschnitt aufweist.

5. Luftstromführungsvorrichtung (1) nach einem der vorhergehenden Ansprüche 3 oder 4, wobei die Innenwand (14) beabstandet zu der Außenwand (13) angeordnet ist und einen Hohlraum (15), insbesondere einen ringförmigen Hohlraum, mit einem Hohlraumvolumen (Vo) ausbildet.

6. Luftstromführungsvorrichtung (1) nach dem vorhergehenden Anspruch 5, wobei die Innenwand (14) wenigstens einen Durchgangskanal (16) aufweist, der den Strömungskanal (K) mit dem Hohlraum (15) strömungstechnisch verbindet, wobei die Innenwand (14) vorzugsweise als Lochblechwand ausgebildet ist, wobei besonders bevorzugt die Innenwand (14) mehrere Durchgangskanäle (16) aufweist, die äquidistant beabstandet zueinander angeordnet sind.

7. Luftstromführungsvorrichtung (1) nach dem vorhergehenden Anspruch 6, wobei der wenigstens eine Durchgangskanal (16) eine freie Innenwandöffnungsquerschnittsfläche (So) der Innenwand (14) definiert, wobei mindestens ein Drittel, mindestens eine Hälfte oder mindestens zwei Drittel der Innenwand (14) durch die freie Innenwandöffnungsquerschnittsfläche (So) ausgebildet sind.

8. Luftstromführungsvorrichtung (1) nach einem der vorhergehenden Ansprüche 1 bis 7, wobei zwischen der Innenwand (14) und der Außenwand (13), insbesondere in dem Hohlraum (15), ein Schallabsorptionselement (17) angeordnet ist.

9. Luftstromführungsvorrichtung (1) nach einem der vorhergehenden Ansprüche 1 bis 8, aufweisend

— einen Strömungsgleichrichter (18), der an der Auslassöffnung (12) angeordnet ist, insbesondere in Strömungsrichtung (S) des Luftstroms (S) vorgelagert zu der Auslassöffnung (12) angeordnet ist, und/oder

— wobei ein Gitterelement (19) in Strömungsrichtung (S) des Luftstroms (S) vorgelagert zu der Einlassöffnung (12) angeordnet ist, wobei vorzugsweise:

• das Gitterelement (19) den Einlassquerschnitt der Einlassöffnung (11) überdeckt, und/oder
• das Gitterelement (19) mehrere Einlasskanäle (20) aufweist, die eine Umgebung der Luftstromführungsvorrichtung (1) mit dem Strömungskanal (K) strömungstechnisch verbinden, und/oder
• der wenigstens eine Einlasskanal (20) eine freie Einlassöffnungsquerschnittsfläche (Si) des Gitterelements (19) definiert, wobei mindestens ein Drittel oder mindestens eine Hälfte oder mindestens zwei Drittel des Gitterelements (19) durch die freie Einlassöffnungsquerschnittsfläche (Si) ausgebildet sind.

10. Luftstromführungsvorrichtung (1) nach einem der vorhergehenden Ansprüche 1 bis 9, wobei die Luftstromführungsvorrichtung (1) als Helmholtz-Absorber ausgebildet ist, wobei der Hohlraum (15) als Resonanzkörper ausgebildet ist,

wobei vorzugsweise der Hohlraum (15) in der Axialrichtung (A) und durch die Außenwand (13) der Hohlraum in der Radialrichtung (R) gegenüber der Umgebung (U) luftdicht verschlossen ist, und/oder

vorzugsweise aufweisend eine Hohlraumsperreinheit (21), welche ausgebildet ist, den Hohlraum (15) in der Axialrichtung (A) gegenüber der Umgebung (U) luftdicht zu verschließen.

11. Luftstromführungsvorrichtung (1) nach dem vorhergehenden Anspruch 10, wobei die freie Innenwandöffnungsquerschnittsfläche (So) der Innenwand (14), eine Wandstärke der Innenwand (14) und das Hohlraumvolumen (Vo) des Hohlraums in Abhängigkeit einer dominanten Frequenz f des Ventilators (3) gemäß folgender Formel

$$f = \frac{c}{2\pi}\sqrt{\frac{S_0}{V_0 \cdot L}}$$

ausgestaltet sind.

12. Ventilatorvorrichtung (5), insbesondere Ventilatorvorrichtung einer Windenergieanlage (100), aufweisend

— einen Ventilator (3), insbesondere einen Radialventilator (3), mit einer Einlassdüse (2), die eine Düseneingangsöffnung (4) mit einem Anströmwinkel (β) aufweist, und
— eine Luftstromführungsvorrichtung (1) nach einem der vorhergehenden Ansprüche 1 bis 11, die an der Düseneingangsöffnung (4) der Einlassdüse (2) angeordnet ist,

wobei vorzugsweise die Luftstromführungsvorrichtung (1) in Strömungsrichtung des Luftstroms (S) vorgelagert zu dem Ventilator (3) angeordnet ist, und/oder ferner bevorzugt der Auslassquerschnitt einem Querschnitt der Düseneingangsöffnung entspricht.

13. Generator, insbesondere Generator einer Windenergieanlage (100), aufweisend mindestens eine Ventilatorvorrichtung (5) nach dem vorhergehenden Anspruch 12.

14. Windenergieanlage (100), aufweisend einen Generator nach dem vorhergehenden Anspruch 13 und/oder eine Ventilatorvorrichtung nach dem vorhergehenden Anspruch 12.

Fig. 1

Fig. 2

U

K

1

D, b

d

13

18

17

2, 4

14

16

Fig. 3

Fig. 4

U

1

K

D, b

13

d

21

18

14

2, 4

16

Fig. 5

**EUROPÄISCHER RECHERCHENBERICHT**

**Nummer der Anmeldung**

**EP 21 20 5212**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 626 644 A1 (TROX GMBH GEB [DE]) 14. August 2013 (2013-08-14) | 1-8,10, 11 | INV. F04D17/16 |
| Y | * Abbildungen 7-9 * <br> * Absätze [0033] – [0053] * <br>----- | 12-14 | F04D29/42 <br> F04D29/44 <br> F04D29/66 |
| Y | EP 2 141 360 A2 (WOBBEN PROPERTIES GMBH [DE]) 6. Januar 2010 (2010-01-06) <br> * Abbildung 2 * <br> * Anspruch 1 * <br>----- | 12-14 | |
| X | US 2 435 645 A (BERGSTROM CARL O) 10. Februar 1948 (1948-02-10) <br> * Abbildung 1 * <br> * Spalte 1, Zeile 35 – Spalte 2, Zeile 19 * <br>----- | 1,9 | |
| X | US 8 123 468 B2 (SHIRAHAMA SEIJI [JP]; OGINO KAZUO [JP] ET AL.) 28. Februar 2012 (2012-02-28) <br> * Abbildungen 1-31 * <br> * Spalte 11, Zeile 51 – Spalte 13, Zeile 21 * <br>----- | 1,10,11 | RECHERCHIERTE SACHGEBIETE (IPC) |
| X | EP 3 111 094 A1 (EBM-PAPST ST GEORGEN GMBH & CO KG [DE]) 4. Januar 2017 (2017-01-04) <br> * Abbildung 3 * <br> * Anspruch 1 * <br>----- | 1 | F04D |

Der vorliegende Recherchenbericht wurde für alle Patentansprüche erstellt

| Recherchenort | Abschlußdatum der Recherche | Prüfer |
|---|---|---|
| Den Haag | 8. April 2022 | Ingelbrecht, Peter |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 20 5212

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-04-2022

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| EP 2626644 | A1 | | 14-08-2013 | DK | 2626644 | T3 | 21-01-2019 |
| | | | | EP | 2626644 | A1 | 14-08-2013 |
| | | | | ES | 2703506 | T3 | 11-03-2019 |
| | | | | HU | E040635 | T2 | 28-03-2019 |
| | | | | PL | 2626644 | T3 | 29-03-2019 |
| | | | | PT | 2626644 | T | 17-01-2019 |
| | | | | TR | 201820381 | T4 | 21-01-2019 |
| EP 2141360 | A2 | | 06-01-2010 | AR | 051110 | A1 | 20-12-2006 |
| | | | | AU | 2005287455 | A1 | 30-03-2006 |
| | | | | BR | PI0515874 | A | 12-08-2008 |
| | | | | CA | 2579910 | A1 | 30-03-2006 |
| | | | | CA | 2678620 | A1 | 30-03-2006 |
| | | | | CN | 101023265 | A | 22-08-2007 |
| | | | | CY | 1113629 | T1 | 22-06-2016 |
| | | | | DE | 102004046700 | A1 | 06-04-2006 |
| | | | | DE | 102004064007 | B4 | 20-08-2009 |
| | | | | DK | 1794450 | T3 | 29-10-2012 |
| | | | | EP | 1794450 | A1 | 13-06-2007 |
| | | | | EP | 2141360 | A2 | 06-01-2010 |
| | | | | ES | 2392444 | T3 | 10-12-2012 |
| | | | | ES | 2629098 | T3 | 07-08-2017 |
| | | | | JP | 4545795 | B2 | 15-09-2010 |
| | | | | JP | 5388903 | B2 | 15-01-2014 |
| | | | | JP | 2008513665 | A | 01-05-2008 |
| | | | | JP | 2010116925 | A | 27-05-2010 |
| | | | | KR | 20070058646 | A | 08-06-2007 |
| | | | | MA | 28918 | B1 | 01-10-2007 |
| | | | | NZ | 553576 | A | 31-07-2009 |
| | | | | PL | 1794450 | T3 | 28-06-2013 |
| | | | | PT | 1794450 | E | 12-11-2012 |
| | | | | PT | 2141360 | T | 30-06-2017 |
| | | | | SI | 1794450 | T1 | 31-05-2013 |
| | | | | US | 2008197638 | A1 | 21-08-2008 |
| | | | | US | 2012032449 | A1 | 09-02-2012 |
| | | | | WO | 2006032515 | A1 | 30-03-2006 |
| | | | | ZA | 200701761 | B | 30-04-2008 |
| US 2435645 | A | | 10-02-1948 | KEINE | | | |
| US 8123468 | B2 | | 28-02-2012 | KEINE | | | |
| EP 3111094 | A1 | | 04-01-2017 | DE | 102014102370 | A1 | 27-08-2015 |
| | | | | EP | 3111094 | A1 | 04-01-2017 |
| | | | | WO | 2015124237 | A1 | 27-08-2015 |

EPO FORM P0461

Für nähere Einzelheiten zu diesem Anhang : siehe Amtsblatt des Europäischen Patentamts, Nr.12/82